# FASCICULE DE BREVET EUROPEEN

(11) **EP 2 651 753 B1**
(45) Date de publication et mention de la délivrance du brevet: **23.01.2019**
(21) Numéro de dépôt: 10807528.4
(22) Date de dépôt: 14.12.2010
(51) Int. Cl.: B63B 1/38

(54) **DISPOSITIF POUR LA REDUCTION DES FORCES DE FROTTEMENT ENTRE UNE SURFACE IMMERGEE D'UNE EMBARCATION ET L'EAU.**
VORRICHTUNG ZUR VERRINGERUNG DER REIBUNGSKRÄFTE ZWISCHEN EINER EINGETAUCHTEN FLÄCHE EINES WASSERFAHRZEUGES UND WASSER
DEVICE FOR REDUCING THE FRICTION FORCES BETWEEN A SUBMERGED SURFACE OF A CRAFT AND THE WATER

(43) Date de publication de la demande: 23.10.2013
(73) Titulaire: Colas, Olivier, 78890 Garancieres (FR)
(72) Inventeur: Colas, Olivier, 78890 Garancieres (FR)
(74) Mandataire: Mazabraud, Xavier
(86) Numéro de dépôt international: PCT/FR2010/052716
(87) Numéro de publication internationale: WO 2012/080583

(56) Documents cités:
- WO-A2-2005/122676
- FR-A- 733 024
- FR-A- 1 122 039
- FR-A- 1 275 369
- FR-A- 1 592 995
- FR-A1- 2 640 223
- FR-A1- 2 946 614
- US-A1- 2001 022 152
- US-A1- 2010 018 452

## Description

La présente invention concerne un dispositif pour la réduction des forces de frottement entre la surface immergée d'une embarcation et l'eau.

Elle s'applique notamment, mais non exclusivement, à tous les engins nautiques évoluant sur l'eau, à des fins commerciales, militaires, sportives, ou de loisir. Elle s'applique à des embarcations de surface ou sous-marines. D'une manière générale, on sait qu'il a déjà été proposé notamment par la demande de brevet européen 0 293 538 ainsi que dans US2001022152 un dispositif servant à créer sous la coque d'un bateau une couche d'air servant de revêtement antifriction.

A cet effet, ce dispositif prévoit une pluralité de canalisations d'air débouchant sous la coque au niveau de diffuseurs d'air consistant en des cavités réalisées dans la coque.

Il s'agit donc d'une solution particulièrement coûteuse, volumineuse, lourde et donc peu opérationnelle et peu efficace.

L'invention a donc plus particulièrement pour but de supprimer ces inconvénients.

Elle propose à cet effet un dispositif pour la réduction des forces de frottement entre la surface immergée d'une embarcation et l'eau, comprenant au moins un conduit relié à une source de gaz et apte à conduire ledit gaz vers une pluralité de perçages réalisés dans ladite surface immergée de l'embarcation, ces perçages étant associés à des déflecteurs orientés relativement au sens de déplacement de l'embarcation.

De cette façon, on engendre, en aval de chacun desdits déflecteurs, une zone de dépression locale provoquant l'aspiration au moins partielle du gaz contenu dans le conduit et la formation de poches de gaz dans les susdites zones.

La surface immergée de l'embarcation est soumise au frottement de l'eau lorsqu'elle se déplace. L'invention vise à réduire ce frottement en « lubrifiant » cette surface immergée avec un gaz.

Les déflecteurs peuvent par exemple présenter une concavité qui sera orientée vers l'avant de l'embarcation, c'est à dire tournée vers l'amont du courant d'eau provoqué par le déplacement de l'embarcation, de façon à aspirer l'air contenu dans le ou les conduit(s) par effet Venturi.

Avantageusement, ladite surface immergée peut doubler au moins une partie de la coque de l'embarcation et délimiter avec celle-ci un espace intercalaire qui constitue ledit conduit.

Dans ce mode de réalisation, la surface immergée porteuse des perçages et des déflecteurs est une double coque au moins partielle de la coque de l'embarcation. Le conduit de gaz est simplement l'espace intercalaire entre la coque et cette double coque.

Alternativement, les conduits peuvent comprendre une pluralité de canalisations fixées sur la face interne de la coque et débouchant chacun sur un desdits perçages.

Dans ce mode de réalisation, la surface immergée porteuse des perçages et des déflecteurs la coque elle-même, les conduits sont intérieurs à l'embarcation et les conduits sont des canalisations fixées sur la face interne de la coque.

Ces canalisations peuvent par ailleurs être aptes à contribuer à la rigidité de la coque de l'embarcation, par exemple en étant intégrées à la structure, par exemple en constituant des raidisseurs et/ou des lices.

Avantageusement, le/les conduits peuvent être en relation avec l'atmosphère en débouchant par une ouïe située au niveau de la surface émergée de ladite embarcation ; le gaz aspiré est alors de l'air et ladite embarcation est une embarcation de surface.

Avantageusement, un moyen de pompage est monté sur les conduits de façon à y insuffler de l'air.

De façon alternative, le/les conduits peuvent être en relation avec une source de gaz comprimé et en ce que ladite embarcation est une embarcation sous-marine.

Dans ce mode de réalisation, l'embarcation étant sous-marine, on insuffle du gaz dans les conduits grâce à une source de gaz comprimé, par exemple un réservoir de gaz comprimé ou une pompe ; les gaz peuvent être des gaz d'échappement de moteurs.

Avantageusement, le dispositif comprend, en aval des susdits déflecteurs, un relief apte à engendrer des turbulences permettant la formation d'un mélange gaz/eau se libérant de la susdite poche. Ce relief particulier sera appelé brouilleur.

L'invention porte également sur un procédé de réduction des forces de frottement entre une surface immergée et l'eau, ladite surface comportant une pluralité des perçages, lesdits perçages étant associés à des déflecteurs et communiquant avec au moins un conduit relié à une source de gaz, ledit procédé consistant à engendrer en aval de chacun desdits déflecteurs une zone de dépression locale provoquant une aspiration du gaz contenu dans ledit au moins conduit et la formation de poches de gaz dans les susdites zones.

Avantageusement, on peut en outre dans ce procédé, insuffler du gaz dans ledit au moins conduit de façon à améliorer la formation des poches de gaz, notamment aux vitesses faibles.

Avantageusement, on peut en outre dans ce procédé, engendrer au niveau dudit relief des turbulences permettant la formation d'un mélange gaz/eau se libérant de la susdite poche, lorsque ladite surface immergée comporte un relief en aval d'au moins un des susdits déflecteurs.

Un mode d'exécution de l'invention sera décrit ci-après, à titre d'exemple non limitatif, avec référence aux dessins annexés dans lesquels :
La figure 1 est une coupe verticale longitudinale d'une planche à voile équipée d'un dispositif selon l'invention ;
La figure 2 est une vue de dessous de la planche à voile représentée figure 1 ;
La figure 3 est une coupe verticale schématique partielle de la planche à voile montrant un ensemble déflecteur/orifice/brouilleur ;
La figure 4 est une vue de dessous de la planche correspondant à la figure 3.

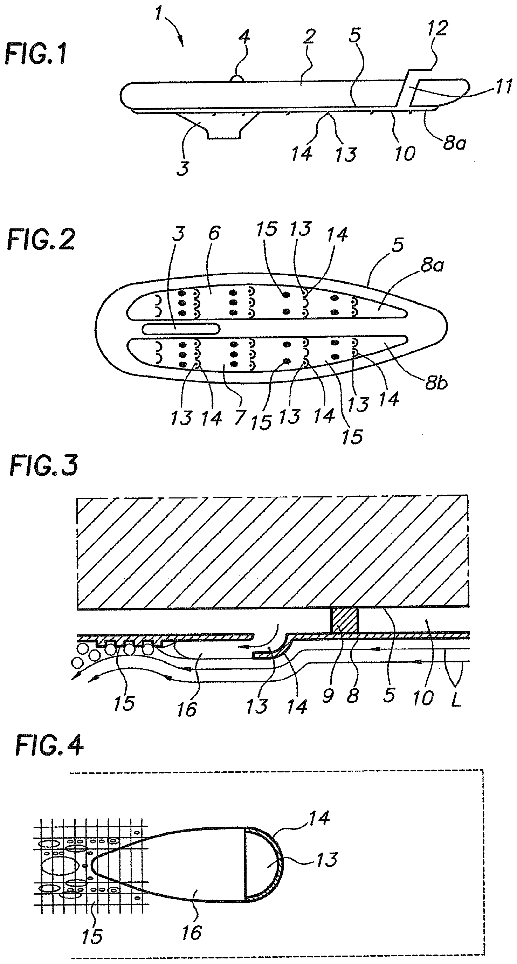

Telle que représentée sur les figures 1 et 2, la planche à voile 1 se compose d'un flotteur plat 2, de forme ovoïde classique, muni, à sa partie inférieure, d'un aileron pouvant être amovible 3 et, à sa partie supérieure, d'inserts 4 servant à la fixation des différents équipements habituels tels qu'un mât.

La surface de glisse immergée 5 de la planche 2 est doublée au niveau de deux zones latérales oblongues 6, 7 qui s'étendent longitudinalement de part et d'autre de l'aileron 3, par deux doubles parois respectives 8a, 8b.

Ces doubles parois 8a, 8b sont fixées par leur périphérie à la surface glissante 5 du flotteur 2 et ce, de façon étanche. Elles sont maintenues espacées de celui-ci grâce à des entretoises 9 dont un spécimen est représenté sur la figure 3.

L'espace intercalaire compris entre les double parois 8a, 8b et le flotteur 2 constitue un conduit 10 qui est mis en communication avec l'atmosphère extérieure grâce à deux conduits respectifs (manches à air) 11 traversant le flotteur 2 et débouchant par des ouïes 12 prévues au niveau de la surface émergée.

Conformément à l'invention, les double parois 8a, 8b comprennent une multiplicité d'orifices 13 respectivement associés, d'une part, à des déflecteurs 14 définissant, au droit des orifices 13, des concavités orientées en sens inverse du sens de déplacement de la planche et, d'autre part, à des brouilleurs 15 situés en aval des orifices 13 à une distance prédéterminée de ces derniers.

Comme on peut le voir sur les figures 3 et 4, lorsque la planche se déplace, les déflecteurs 14 (ou décolleurs) respectifs permettent de détourner l'écoulement de l'eau légèrement en amont des orifices 13. Les lignes L d'écoulement de la couche limite sont donc déviées et créent des dépressions au niveau des orifices 13. Dans un premier temps, cette dépression provoque l'aspiration de l'eau contenue dans le volume compris entre la coque et la double paroi puis une aspiration d'air en provenance des conduits pour former une poche d'air ovoïde 16 qui s'étend vers l'aval à partir de chaque déflecteur 14.

Les brouilleurs 15 situés en aval de chacun des couples orifice 13/déflecteur 14 sont constitués par un motif en relief (comprenant par exemple des striures ou des têtes sensiblement coniques) réalisé sur la face extérieure des doubles parois 8a, 8b. Ce relief a pour but d'engendrer des turbulences et de parfaire un mélange air-eau à l'endroit où les lignes d'eau décollées L rejoignent à nouveau la surface extérieure des doubles parois 8a, 8b. On obtient donc au niveau des doubles parois 8a, 8b une couche formée d'un mélange de microbulles d'air et d'eau qui assure une lubrification et réduit ainsi de façon significative les forces de frottement entre la planche et l'eau.

Dans cet exemple, les couples déflecteurs/orifices sont obtenus par emboutissage, avec découpe partielle, des doubles parois 8a, 8b, lesquelles peuvent être avantageusement réalisées en tôle métallique. La partie emboutie, dont la matière occupait initialement l'emplacement de chaque orifice 13, constitue le déflecteur 14.

Bien entendu, l'invention ne se limite pas à l'exemple d'application précédemment décrit. Par exemple le conduit 10 peut être constitué d'un ensemble de tuyauteries reliées à la face interne de la coque.

Egalement, du gaz peut être insufflé dans le conduit 10 de façon à renforcer l'aspiration provoquée par l'effet Venturi au niveau des déflecteurs 14, soit par pompage, soit en recourant à un réservoir de gaz comprimé.

L'invention peut notamment s'appliquer à la réalisation de coques ou de flotteurs d'hydravions ou même à la réalisation de planches de ski nautique.

## Revendications

1. Engin nautique comportant une surface (5) destinée à être immergée, comportant en outre un dispositif pour la réduction des forces de frottement entre ladite surface et l'eau lorsque ladite surface est immergée,
ledit dispositif comprenant au moins un conduit (10) relié à une source de gaz et apte à conduire ledit gaz vers une pluralité d'orifices (13) réalisés dans ladite surface, ces orifices (13) étant associés à des déflecteurs (14) présentant une convexité orientée vers l'avant de l'engin nautique, de façon à créer une aspiration d'air en provenance des conduits pour former une poche de gaz (16) qui s'étend en aval à partir de chaque déflecteur (14),
**caractérisé en ce qu'**il comprend, en aval de chacun desdits couples orifice (13)/déflecteur (14), réalisé sur ladite surface à l'endroit où des lignes d'eau décollées (L) rejoignent à nouveau cette surface, un motif en relief apte à engendrer des turbulences permettant la formation d'un mélange gaz/eau se libérant de ladite poche (16).

2. Engin nautique selon la revendication 1,
**caractérisé en ce qu'**il comporte une coque et **en ce que** la surface (5) double au moins une partie de ladite coque et délimite avec celle-ci un espace intercalaire qui constitue le conduit (10).

3. Engin nautique selon la revendication 1,
**caractérisé en ce qu'**il comporte une coque et **en ce que** l'au moins un conduit (10) comprend une pluralité de canalisations fixées sur la face interne de ladite coque et débouchant chacun sur un desdits perçages (13).

4. Engin nautique selon l'une quelconque des revendications 1 à 3,
**caractérisé en ce qu'**il s'agit d'un engin nautique de surface, **en ce que** l'au moins un conduit (10) est en relation avec l'atmosphère et débouche par une ouïe (12) située au niveau de la surface émergée dudit engin nautique et **en ce que** le gaz aspiré est de l'air.

5. Engin nautique selon la revendication 3,
**caractérisé en ce qu'**un moyen de pompage est monté sur l'au moins un conduit (10) de façon à y insuffler de l'air.

6. Engin nautique selon l'une quelconque des revendications 1 à 3,
**caractérisé en ce qu'**il s'agit d'un engin nautique sous-marin et **en ce que** l'au moins un conduit (10) est en relation avec une source de gaz comprimé.

7. Engin nautique selon l'une des revendications précédentes,
**caractérisé en ce que** le relief comprend des striures et/ou des têtes sensiblement coniques.

8. Engin nautique selon l'une des revendications précédentes,
**caractérisé en ce que** les couples déflecteur (14)/orifice (13) sont obtenus par emboutissage avec découpe partielle de la surface (5), la partie emboutie, dont la matière occupait initialement l'emplacement de chaque orifice (13), constituant ledit déflecteur (14).

9. Engin nautique selon l'une des revendications précédentes,
**caractérisé en ce qu'**il consiste en une embarcation de surface ou sous-marine, un flotteur d'hydravion, une planche à voile ou une planche de ski nautique.

10. Procédé de réduction des forces de frottement entre une surface immergée d'un engin nautique et l'eau, ladite surface comportant une pluralité des orifices (13), lesdits orifices étant associés à des déflecteurs (14) et communiquant avec au moins un conduit (10) relié à une source de gaz, de façon à engendrer en aval de chacun desdits déflecteurs (14) une zone de dépression locale provoquant une aspiration du gaz contenu dans ledit au moins conduit (10) et la formation de poches de gaz (16) dans lesdites zones, ledit procédé étant **caractérisé en ce qu'**il comporte la disposition, en aval de chacun desdits couples orifice (13)/déflecteur (14), réalisé sur ladite surface à l'endroit où des lignes d'eau décollées (L) rejoignent à nouveau cette surface, un motif en relief apte à engendrer des turbulences permettant la formation d'un mélange gaz/eau se libérant de ladite poche (16).

11. Procédé selon la revendication 10,
**caractérisé en ce qu'**en outre, on insuffle du gaz dans l'au moins conduit (10).

## Patentansprüche

1. Wasserfahrzeug mit einer zum Eintauchen bestimmten Fläche (5) und ferner mit einer Vorrichtung zur Verringerung der Reibungskräfte zwischen der Fläche und dem Wasser, wenn die Fläche eingetaucht ist,
wobei die Vorrichtung mindestens eine Leitung (10) umfasst, die mit einer Gasquelle verbunden ist und geeignet ist, das Gas zu einer Mehrzahl von Öffnungen (13) zu leiten, die in der Fläche gebildet sind, wobei diese Öffnungen (13) Deflektoren (14) mit einer Konvexität zugeordnet sind, die zur Vorderseite des Wasserfahrzeugs orientiert ist, damit eine Luftansaugung aus den Kanälen entsteht, um eine Gastasche (16) zu bilden, die sich von jedem Deflektor (14) stromabwärts erstreckt,
**dadurch gekennzeichnet, dass** das Wasserfahrzeug stromabwärts jedes Paares aus Öffnung (13) und Deflektor (14) eine erhabene Prägung aufweist, die an der Fläche an der Stelle gebildet ist, an der die abgelösten Wasserlinien (L) erneut mit dieser Fläche vereint werden, und die geeignet ist zum Erzeugen von Turbulenzen, die die Bildung eines Gas/Wasser-Gemisches ermöglichen, das aus der Gastasche (16) freigesetzt wird.

2. Wasserfahrzeug nach Anspruch 1,
**dadurch gekennzeichnet, dass** dieses einen Rumpf hat und dass die Fläche (5) zumindest einen Teil des Rumpfes doppelt und mit diesem Teil einen Zwischenraum begrenzt, der die Leitung (10) bildet.

3. Wasserfahrzeug nach Anspruch 1,
**dadurch gekennzeichnet, dass** dieses einen Rumpf hat und dass die wenigstens eine Leitung (10) eine Mehrzahl von Rohren umfasst, die an der Innenfläche des Rumpfes befestigt sind und jeweils in eine der Bohrungen (13) münden.

4. Wasserfahrzeug nach einem der Ansprüche 1 bis 3,
**dadurch gekennzeichnet, dass** dieses ein Überwasserfahrzeug ist und dass die wenigstens eine Leitung (10) mit der Atmosphäre in Verbindung steht und durch eine Kieme (12), die an der eingetauchten Fläche des Wasserfahrzeugs liegt, mündet und dass das angesaugte Gas Luft ist.

5. Wasserfahrzeug nach Anspruch 3,
**dadurch gekennzeichnet, dass** eine Pumpvorrichtung an der wenigstens einen Leitung (10) montiert ist, so dass Luft in diese eingeblasen werden kann.

6. Wasserfahrzeug nach einem der Ansprüche 1 bis 3,
**dadurch gekennzeichnet, dass** dieses ein Unterwasserfahrzeug ist und dass die wenigstens eine Leitung (10) mit einer Druckgasquelle in Verbindung steht.

7. Wasserfahrzeug nach einem der vorhergehenden Ansprüche,
**dadurch gekennzeichnet, dass** die Prägung Rillen und/oder im Wesentlichen konische Köpfe umfasst.

8. Wasserfahrzeug nach einem der vorhergehenden Ansprüche,
**dadurch gekennzeichnet, dass** die Paare aus Deflektor (14) und Öffnung (13) erhalten werden durch das Stanzen der Oberfläche (5) mit teilweisem Ausschneiden derselben, wobei der gestanzte Bereich, dessen Material ursprünglich die Stelle der jeweiligen Öffnung (13) eingenommen hat, den Deflektor (14) bildet.

9. Wasserfahrzeug nach einem der vorhergehenden Ansprüche,
**dadurch gekennzeichnet, dass** dieses aus einem Überwasserfahrzeug oder einem Unterwasserfahrzeug, einem Schwimmflugzeug, einem Surfbrett oder einem Wasserskibrett besteht.

10. Verfahren zur Verringerung der Reibungskräfte zwischen einer eingetauchten Fläche eines Wasserfahrzeugs und dem Wasser, wobei die Fläche eine Mehrzahl von Öffnungen (13) aufweist, denen Deflektoren (14) zugeordnet sind und die mit zumindest einer Leitung (10) in Verbindung stehen, die mit einer Gasquelle verbunden ist, so dass stromabwärts jedes der Deflektoren (14) eine lokale Unterdruckzone entsteht, die bewirkt, dass Gas angesaugt wird, das in der wenigstens einen Leitung (10) enthalten ist, und dass in diesen Zonen Gastaschen (16) gebildet werden, wobei das Verfahren **dadurch gekennzeichnet ist, dass** stromabwärts jedes der Paare aus Öffnung (13) und Deflektor (14) eine erhabene Prägung angeordnet wird, die an der Fläche an der Stelle gebildet wird, an der die abgelösten Wasserlinien (L) erneut mit dieser Fläche vereint werden, und die geeignet ist zum Erzeugen von Turbulenzen, die die Bildung eines Gas/Wasser-Gemisches ermöglichen, das aus der Gastasche (16) freigesetzt wird.

11. Verfahren nach Anspruch 10,
**dadurch gekennzeichnet, dass** ferner Gas zumindest in die Leitung (10) eingeblasen wird.

## Claims

1. Watercraft comprising a surface (5) configured to be immersed, further comprising a device to reduce friction forces between said surface and the water when said surface is immersed, said device comprising at least one conduit (10) connected to a gas source and capable of driving said gas towards a plurality of orifices (13) made in said surface, these orifices (13) being associated with deflectors (14) having a convexity oriented towards the front of the watercraft, so as to create an air suction coming from the conduits to form a gas pocket (16) which extends downstream from each deflector (14), **characterised in that** it comprises, downstream of each of said orifice (13)/deflector (14) couples, made on said surface in the place where the removed water lines (L) again join this surface, a relief pattern capable of generating turbulence, making it possible to form a gas/water mixture being released from said pocket (16).

2. Watercraft according to claim 1, **characterised in that** it comprises a shell and **in that** the surface (5) doubles at least one part of said shell and delimits with it, a dividing space which constitutes the conduit (10).

3. Watercraft according to claim 1, **characterised in that** it comprises a shell and **in that** the at least one conduit (10) comprises a plurality of conduits fixed on the inner surface of said shell and each leading to one of said bores (13).

4. Watercraft according to any one of claims 1 to 3, **characterised in that** it is a surface watercraft, **in that** the at least one conduit (10) is related to the atmosphere and leads to a gill (12) situated at the emerged surface of said watercraft and **in that** the suctioned gas is air.

5. Watercraft according to claim 3, **characterised in that** a pumping means is mounted on the at least one conduit (10) so as to inject air into it.

6. Watercraft according to any one of claims 1 to 3, **characterised in that** it is an underwater watercraft and **in that** the at least one conduit (10) is related to a compressed gas source.

7. Watercraft according to one of the preceding claims, **characterised in that** the relief comprises striations and/or substantially conical heads.

8. Watercraft according to one of the preceding claims, **characterised in that** the deflector (14)/orifice (13) couples are obtained by stamping with partially cutting the surface (5), the stamped part, of which the material initially occupied the place of each orifice (13), constituting said deflector (14).

9. Watercraft according to one of the preceding claims, **characterised in that** it consists of a surface or underwater craft, a seaplane float, a surfboard or a water ski board.

10. Method for reducing friction forces between an immersed surface of a watercraft and water, said surface comprising a plurality of orifices (13), said orifices being associated with the deflectors (14) and communicating with at least one conduit (10) connected to a gas source, so as to generate downstream of each of said deflectors (14), a local depression zone leading to a suction of the gas contained in said at least one conduit (10) and the formation of gas pockets (16) in said zones, said method being **characterised in that** it comprises the movement, downstream of each of said orifice (13)/deflector (14) couples, made on said surface in the place where the removed water lines (L) again join this surface, a relief pattern capable of generating turbulence, making it possible to form a gas/water mixture being released from said pocket (16).

11. Method according to claim 10, **characterised in that** furthermore, the gas is injected into the at least one conduit (10).
